# FASCICULE DE BREVET EUROPEEN

(11) **EP 2 625 691 B1**
(45) Date de publication et mention de la délivrance du brevet: **19.11.2014**
(21) Numéro de dépôt: 11764200.9
(22) Date de dépôt: 04.10.2011
(51) Int. Cl.: G21C 3/07, G21C 3/60

(54) **AIGUILLE DE COMBUSTIBLE NUCLEAIRE METALLIQUE COMPRENANT UNE ENVELOPPE AVEC DES FILS OU DES FIBRES EN CARBURE DE SILICIUM (SIC)**
KERNBRENNSTAB MIT METALLISCHEM BRENNSTOFF UND EINER UMHÜLLUNG MIT FÄDEN ODER FASERN AUS SILIZIUMKARBID
METALLIC NUCLEAR FUEL ROD COMPRISING A CLADDING WITH YARNS OR FIBRES MADE OF SILICIUM CARBIDE (SIC)

(30) Priorité: 07.10.2010 FR 1058149
(43) Date de publication de la demande: 14.08.2013
(73) Titulaire: Commissariat à l'Énergie Atomique et aux Énergies Alternatives, 75015 Paris (FR)
(72) Inventeur: MAZAUDIER, Fabrice, F-04100 Manosque (FR)
(74) Mandataire: Esselin, Sophie
(86) Numéro de dépôt international: PCT/EP2011/067308
(87) Numéro de publication internationale: WO 2012/045740

(56) Documents cités:
- EP-A2- 2 096 643
- WO-A2-2006/076039
- US-A- 3 291 700
- US-A1- 2007 189 952

## Description

Le domaine de l'invention est celui des réacteurs à neutrons rapides, dits de quatrième génération, conçus pour fonctionner avec des combustibles à base d'uranium et de plutonium, et étudiés pour répondre à la demande mondiale croissante d'énergie, dans le contexte global du réchauffement climatique, avec des objectifs accrus en termes de performances et de sûreté.

Plusieurs concepts de réacteurs sont étudiés et proposés, avec des solutions technologiques différentes pour les systèmes [combustibles/gaine/caloporteur].

Le concept SFR (Sodium-cooled Fast Reactor), refroidi par du sodium liquide (température de service du caloporteur de 500°C typiquement), fait l'objet d'un consensus au niveau international. Deux options sont envisagées pour le combustible nucléaire : le combustible oxyde (U,Pu)O₂, en référence, et le combustible métallique, par exemple UPuZr (par exemple U-20Pu (20% de Pu)-10Zr (10% de Zr)), en alternative. On imagine d'une part des coeurs SFR/Oxyde de forte puissance et des coeurs alternatifs SFR/Métal de petite ou moyenne puissance répondant aux demandes énergétiques locales et excentrées. Pour ces derniers, des concepts de réacteurs "batterie" sont par exemple proposés, sans rechargement de combustible durant la vie du réacteur (lifetime fuelling), avec des exigences de sûreté intrinsèque du combustible renforcées.

A la différence des concepts de réacteurs nucléaires électrogènes actuels (à eau pressurisée ou bouillante, avec un combustible oxyde) pour lesquels l'aiguille combustible est faite d'une gaine métallique en alliage à base de zirconium (zircaloy), le gainage métallique des combustibles pour les réacteurs refroidis au sodium est fait d'une base inoxydable Fe-Cr ou Fe-Cr-Ni pour des alliages austénitiques ou ferrito-martensitiques, plus ou moins sophistiqués ou améliorés (exemples : nuances EM10, T91, HT9, D9, ODS, ou, plus simplement, 316L).

Le combustible métallique présente des caractéristiques particulières posant au moins trois problèmes technologiques :
- son gonflement sous flux neutronique en réacteur, qui crée une interaction forte et dommageable sur la gaine (que l'on rencontre également entre les combustibles oxydes (interaction pastille-gaine ou Fuel (Or Pellet) Cladding Interaction en anglais), et les gaines en zircaloy, dans les réacteurs actuels à eau pressurisée, problème « classique » et récurrent). Pour les formes combustibles métalliques, le gonflement semble aujourd'hui pouvoir être maîtrisé avec une gaine plus résistante, par un design de combustible métallique *ad hoc* et le choix d'une densité plus basse pour l'alliage d'actinides métallique, de sorte que les produits de fissions gazeux puissent massivement s'échapper dans le plenum (espace libre laissé dans l'aiguille), tandis que la porosité générée et originelle permet d'accommoder la déformation ;
- sa faible température de fusion (de l'ordre de 1000°C) le rendant a priori moins robuste lors des excursions de réactivité et, plus généralement, en température ;
- l'existence d'eutectiques (formation d'un mélange de composition déterminée lors de l'interaction entre deux espèces ou éléments) entre le Fe, élément constitutif de la gaine, et l'U et le Pu du matériau combustible, avec des points de fusion très bas (725°C pour l'eutectique U-Fe [Journal and Alloys and Compounds 271-273 (1998) pp. 636-640], 420°C pour l'eutectique Pu-Fe [Journal of Nuclear Materials 383, Vol. 1-2 (2008), pp. 112-118], de l'ordre de 600 °C, quand U et Pu sont alliés au Zr ou selon la nuance de la gaine), ce qui peut dégrader fortement les performances de la première barrière par amincissement et les marges vis-à-vis de la sûreté. Cet eutectique limite aussi et enfin les températures de service que l'on peut atteindre, réduisant le rendement énergétique que l'on pourrait théoriquement obtenir selon les règles de la thermodynamique et le cycle de Carnot. Dans le processus de formation de l'eutectique, le Zr a un rôle très particulier puisqu'il permet d'augmenter la résistance à la fusion, et permet d'augmenter par la même les marges. Malheureusement, sous flux neutronique en réacteur, le Zr du combustible migre vers le centre de l'aiguille qui s'appauvrit concomitamment en cet élément sur sa partie périphérique.

A la place de l'hélium pour remplir les jeux et espaces entre le combustible et la gaine (He-bonding), il est possible d'utiliser du sodium (Na-bonding) qui optimise grandement la thermique du système. Ceci permet de réduire le gradient de température entre le centre du combustible et la gaine et de dégager d'importantes marges de sûreté, vis-à-vis de la fusion, mais entrave malheureusement le processus de relargage des produits de fission gazeux, et complique la gestion du combustible irradié vis-à-vis du retraitement. Le Na-bonding ne supprime pas les risques liés à la formation des eutectiques.

L'un des problèmes majeurs pour l'utilisation du combustible métallique est donc la formation de cet eutectique, et, d'une façon plus générale, sa faible température de fusion.

Pour contribuer à la résolution de ce problème, trois grands principes technologiques sont généralement proposés, étudiés ou mis en oeuvre, au delà du remplissage du crayon par le sodium :
- la modification de la composition de l'alliage métallique combustible ;
- le choix de nuances inoxydables représentant le meilleur compromis entre résistance mécanique, tenue sous irradiation et augmentation de la température eutectique ;
- l'utilisation de liners métalliques, qui ont fait l'objet de nombreux brevets dont certains sont commentés ci-après.

En effet, il existe de nombreux brevets sur les gaines composites de combustible nucléaire comprenant un liner interne qui est le plus souvent de nature métallique, en Zr en particulier, avec une fonction de barrière de diffusion, mais aussi quelquefois un rôle spécifique sur la thermique, sur la résistance à la corrosion interne, ou comme support pour des poisons neutroniques consommables,.... A quelques exceptions près, ces brevets sont plutôt orientés vers une utilisation pour le combustible oxyde et les réacteurs électrogènes fonctionnant avec de l'eau pressurisée comme caloporteur. Concernant l'utilisation du combustible métallique, notamment pour l'application aux réacteurs rapides refroidis au sodium, le brevet EP 0595571 B1 (1997) décrit l'utilisation d'une gaine coaxiale composite, [alliage inoxydable (externe)/alliage de zirconium (interne)], avec la gaine interne de forme elliptique, pour optimiser la thermique et minimiser l'occurrence d'un contact direct entre l'alliage métallique combustible et la gaine inoxydable. Les espaces créés au sein de la gaine coaxiale composite peuvent être remplis par de l'He et du Na séparément pour l'optimisation de la thermique. Il s'agit d'un brevet présenté comme une amélioration du brevet US 4971753 de 1990 (EP A-0409405) où le concept de la gaine coaxiale composite avec un liner Zr est déjà présenté. Ces deux brevets sont explicitement orientés vers l'utilisation de combustibles métalliques.

Ces brevets font référence au brevet US 4894203 (1990) où le liner Zr est modifié pour améliorer la résistance à la corrosion interne. Le brevet US 5227129 (1993) évoque quant à lui la mise en oeuvre de nitrure de zirconium comme liner ainsi qu'une méthode physique pour l'appliquer. Le brevet US 5412701 (1995) présente la possibilité d'utiliser des silicates alcalins sur une base zirconium, comme support pour des poisons neutroniques.

Le brevet US 5301218 décrit une technologie particulière de liner en forme de feuille métallique enroulée (plusieurs feuilles, à l'image d'un rouleau de papier) et refermée autour du combustible cylindrique et soudée à l'extérieur, par une technologie particulière (« Tack welding of an inner rolled metal fuel »), le tout au sein de la gaine. Les spires d'enroulement, peuvent se déformer et se resserrer sous l'effort d'une pression ou charge mécanique qui serait engendrée par le combustible.

La plupart de ces brevets fait directement référence (en terme d'amélioration) à deux brevets de 1966 dans lesquels sont exposés les principes technologiques de la gaine co-axiale composite intégrant une barrière de diffusion métallique. Le brevet US 3230150 (1966) pour le combustible nucléaire UO₂, présente une gaine formée d'un liner (tube) interne en Cu, et d'une partie externe en acier inoxydable, qui s'emmanchent (« multi-tubular cladding »). Le brevet US 3291700 (1966), enfin, pour le combustible métallique de type U ou ses alliages, notamment les UAlₓ, décrit une méthode pour limiter ou supprimer les interactions avec le gainage métallique, notamment l'Al. La technique présentée consiste à enrouler autour du combustible, quelle que soit sa forme physique (plaque ou cylindre), ou sa nature chimique (métallique ou céramique), un bandage métallique choisi, pour l'envelopper complètement avant de le gainer. La méthode de fabrication consiste à utiliser des systèmes technologiques de conception simples, faits de bobines ou rouleaux de feuilles enveloppantes, qui distribuent ledit matériau pour envelopper le combustible, par des mouvements de rotation déterminés.

Pour les applications hautes températures (par exemple les réacteurs de quatrième génération refroidis au gaz ou GFR « Gas-cooled Fast Reactor ») de ces concepts de gaines avancées de combustibles nucléaires comportant des liners, ou plus généralement des solutions matériaux composites, les options céramiques sont préférées, du fait de leur caractère plus réfractaire, et donc plus performantes que les options métalliques.

Le brevet WO/2007/017503 (2007) décrit par exemple un concept de plaque alvéolée composite, faite de SiC monolithique et fibré, et de liners métalliques à base d'alliages réfractaires, pour des combustibles nucléaires par exemple de carbure d'U,Pu typiquement, pouvant fonctionner dans les GFR et fonctionnant à très haute température, avec un cahier des charges très contraignant.

Pour des applications haute température, il est également connu la demande de brevet WO/2006/076039 A2 (EP 1774534) de 2006 pour un tube multicouche composite SiC-SiC supposé répondre au cahier des charges des éléments combustibles pour des réacteurs de quatrième génération refroidis au plomb-lithium ou au gaz, ainsi que pour les applications des centrales thermiques à combustibles fossiles. Enfin le SiC est utilisé de façon originale comme matériau éponge dans le brevet US 4710343 (1987), pour le Césium notamment, pour un concept d'aiguille combustible pour réacteur rapide comprenant, en partie supérieure, du carbure de silicium SiC sous une forme de surface développée importante pour piéger le césium.

Il ressort en synthèse que de l'ensemble des solutions proposées dans l'art connu pour l'application au combustible métallique pour les réacteurs SFR un certain nombre de problèmes demeurent et notamment :
- en condition nominale à une température de fonctionnement d'environ 500°C, des interactions physico-chimiques entre le combustible et la gaine et plus particulièrement de l'eutectique entre le combustible métallique UPuZr et la gaine inoxydable à base de Fe-Cr-Ni ou Fe-Cr ;
- en condition « incidentelle » soit à une température supérieure à la température de fusion du combustible pouvant typiquement être de l'ordre de 1000°C, de la possibilité de maintenir une fraction volumique importante à l'état solide au sein de la gaine, avec de bonne propriétés thermiques en diminuant la réactivité neutronique locale par diminution de la concentration en atome fissile tout en favorisant le maintien des performances de la gaine et sa géométrie.

Dans la plupart des brevets cités, au-delà des effets techniques, les questions de la facilité de fabrication, de la robustesse, et du coût, se posent immédiatement pour les concepts d'aiguilles ou d'éléments combustibles comprenant des liners.

Pour les options « tout céramique » ou « céramique-métal » en particulier, la question de l'assemblage (fabrication, plus largement), et de la qualification thermomécanique, posent des problèmes de fond. Pour les options « tout métal », si les questions de fabrication sont surmontables, le côté opérationnel et les quantités de matière métallique à mettre en oeuvre posent également une question de fond sur la disponibilité et le recyclage de la matière première, et donc sur le coût, ainsi que sur les modes de gestion et de manutention d'éléments combustibles qui sont plus lourds.

Le demandeur part du principe qu'un découplage important des fonctions sur un système complexe et aussi contraint qu'un élément de combustible nucléaire en condition de service est potentiellement source d'effets techniques néfastes, d'autant plus imprédictibles que le nombre d'éléments le composant, leurs interactions ou couplages, sont nombreux, et propose dans la présente invention, une solution simple dans son principe et reposant sur un nombre très limité de composants pour provoquer des effets techniques choisis.

Par rapport à la résolution des problèmes posés et relatifs au comportement du combustible métallique UPuZr pour les SFR, le demandeur n'a pas identifié d'art antérieur abordant et proposant simultanément de solution de type liner matrice interfaciale reposant sur un système simple à fabriquer et à mettre en oeuvre et dont le fonctionnement est globalement prédictible de façon fiable, sur la base de propriétés physiques, mécanique ou chimique par ailleurs très étudiées et bien connues par l'homme de métier.

De telles propriétés interviennent de façon progressive, au gré du champ de perturbations observé pour le combustible métallique pour les SFR dans les situations concernées par la présente invention (élévation de température et dilatation thermique, transitoire de puissance sans fusion du combustible, interdiffusion (avec la gaine) réactive ou non, eutectique (U-Pu-Fe vers 600°C (cas d'un transitoire sans fusion), fusion du combustible vers 1000 °C (situation accidentelle).

Dans ce contexte, la présente invention a pour objet une aiguille de combustible nucléaire métallique permettant de pallier les problèmes précités.

Plus précisément la présente invention a pour objet une aiguille de combustible nucléaire comprenant un élément linéaire de matériau combustible nucléaire métallique à base de l'uranium et/ou du plutonium et une gaine comprenant du fer et du chrome ou un alliage comprenant au moins ces deux éléments caractérisée en ce qu'elle comporte en outre une enveloppe principale disposée autour de l'élément linéaire de combustible nucléaire, ladite enveloppe comprenant des fils ou des fibres de carbure de silicium SiC.

La gaine avantageusement comprend en outre une partie creuse (réservoir appelé plenum) d'évacuation des gaz de fission et un réservoir séparant ladite partie creuse dudit élément linéaire de combustible nucléaire métallique, permettant le bon fonctionnement d'un crayon ou aiguille de combustible électrogène.

Selon une variante de l'invention, ledit réservoir appelé plenum peut recevoir le combustible fondu et comprend un anneau en matériau résistant à la corrosion des actinides fondus.

Selon une variante de l'invention, ledit anneau est en tantale (Ta).

Selon une variante de l'invention, le SiC constitutif des fibres ou des fils est de variété allotropique cubique β.

Selon une variante de l'invention, l'enveloppe comprend en outre des charges de silicium libre.

Selon une variante de l'invention, ladite enveloppe principale comporte des bandes comprenant des fils ou des fibres de SiC.

Selon une variante de l'invention, l'enveloppe principale comprend une succession d'épaisseurs de fibres de SiC enroulées autour de l'élément linéaire de matériau combustible métallique.

Selon une variante de l'invention, l'aiguille comprend en outre une enveloppe primaire de fibres de silice ou de quartz insérée entre l'élément linéaire de combustible et l'enveloppe principale.

Selon une variante de l'invention, l'enveloppe primaire comporte une succession d'épaisseurs de fibres de silice ou de quartz enroulées autour de l'élément linéaire de matériau combustible métallique.

L'invention a aussi pour objet un procédé de fabrication d'une aiguille de combustible nucléaire métallique selon l'invention, caractérisé en ce qu'il comprend la réalisation d'une enveloppe principale autour de l'élément linéaire de combustible nucléaire métallique par tissage ou tressage de fibres de SiC.

Selon une variante de l'invention, le procédé comprend la réalisation de l'enveloppe principale avec des bandes de fibres de SiC enroulées autour de l'élément linéaire de combustible nucléaire métallique.

Selon une variante de l'invention, le procédé comprend en outre une étape préalable d'oxydation de surface de l'élément linéaire de combustible nucléaire métallique.

Selon une variante de l'invention, le procédé comprend en outre une étape préalable d'enduction de l'élément linéaire par un liant comportant une poudre de brasure tendre à base de matériau conducteur de la chaleur.

Selon une variante de l'invention, le procédé comprend en outre la réalisation d'une enveloppe primaire entre l'élément linéaire combustible nucléaire métallique et l'enveloppe principale, ladite enveloppe primaire comportant des fibres de silice ou de quartz.

L'invention sera mieux comprise et d'autres avantages apparaîtront à la lecture de la description qui va suivre donnée à titre non limitatif et grâce aux figures annexées parmi lesquelles :
- la figure 1 schématise l'aiguille de combustible selon l'invention ;
- la figure 2 illustre un premier exemple de procédé de fabrication de l'enveloppe principale comprise dans une aiguille de combustible nucléaire selon l'invention ;
- la figure 3 illustre un second exemple de procédé de fabrication de l'enveloppe principale comprise dans une aiguille de combustible nucléaire selon l'invention ;
- la figure 4 illustre les affinités avec l'oxygène du silicium, du l'uranium, du zirconium ;
- la figure 5 illustre les énergies libres (stabilité) de différents composés en fonction de la température ;
- la figure 6 illustre le comportement de l'aiguille de combustible nucléaire de l'invention en conditions « incidentielles »;
- les figures 7a et 7b illustrent la formation de couches d'interaction de matériaux MxCySiz avec des oxydes de MuSivOw lors de la fusion « incidentielle » de combustible nucléaire métallique.

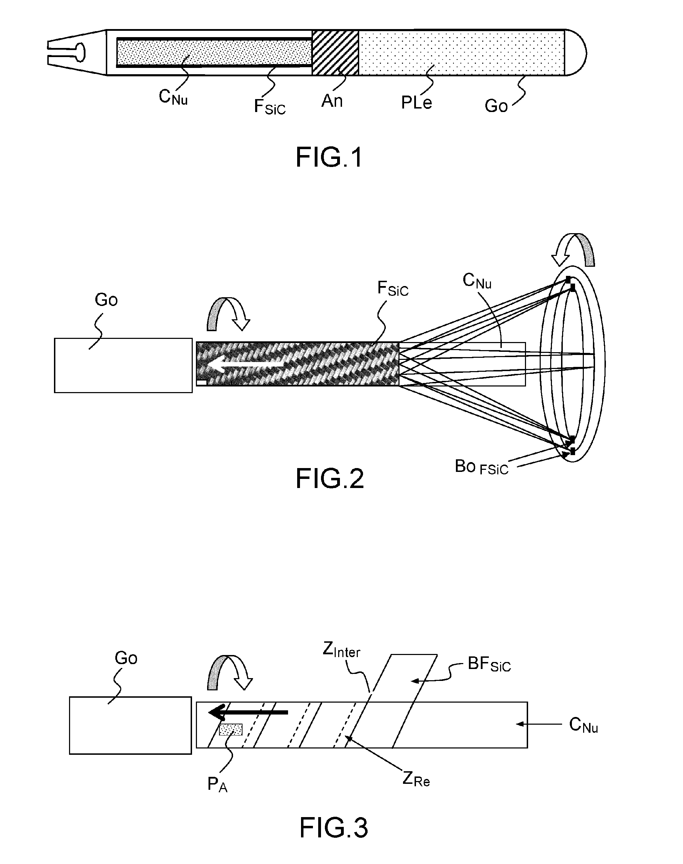

De manière générale et selon la présente invention, l'aiguille comprend comme illustré en figure 1, une gaine Go en matériau inoxydable à base de Fe-Cr-Ni ou Fe-Cr, un élément linéaire de combustible nucléaire métallique C_{Nu} pouvant se présenter sous forme de barre ou de billette de forme cylindrique de faible diamètre, typiquement 5 à 10 mm, le matériau combustible pouvant être de type UPuZr ou UPuX avec X pouvant être par exemple du molybdène. L'aiguille comprend ainsi une première partie comportant la colonne fissile de matériau C_{Nu} et une seconde partie constituée par le plenum P_{Le} pour les gaz.

Avantageusement, il est prévu un anneau An ou liner de tantale Ta, constituant un réservoir résistant à la corrosion des actinides fondus, en conditions opérationnelles.

Avantageusement, il peut être prévu d'opérer une étape d'oxydation de surface, entre 200 et 250°C, à l'air et pendant quelques heures, pour l'obtention d'une couche de quelques micromètres de type MO₂ cubique et adhérente sur son substrat, M étant l'alliage métallique constitutif du combustible nucléaire métallique.

Pour la fabrication des fibres ou fils de SiC, il peut être envisagé différents procédés d'élaboration et notamment de procédés comportant des étapes de tissage de fibre (principe simple et éprouvé dans le domaine aéronautique notamment).

Nous allons décrire ci-après deux exemples de réalisation de l'enveloppe principale à base de fibres de SiC.

### Premier exemple de réalisation d'une aiguille selon l'invention :

La matrice de SiC se présentant sous forme de fils ou fibres, est tissée ou tressée le long de la billette à l'aide d'un dispositif technique bien connu de l'homme de métier. Les premières spires, au contact de la billette, sont avantageusement réalisées avec des fibres pré-oxydées ou avec un tissage de fibres de quartz ou de silice SiO₂.

On peut également utiliser du verre borosilicaté si l'on veut avoir une réserve de poison neutronique, déterminé par le bore dans le verre. En effet, par exemple, le Bore 10 (isotope 10 du bore) capte des neutrons (il est un poison pour les réactions de fission, pour se transformer en bore 11 qui donne de l'He + Li. L'isotope 10B (le bore naturel est un mélange des isotopes 10B (19,8 %m) + 11 B (80,2 %m)), présente, par rapport aux autres absorbants, une efficacité dans un très large spectre, des neutrons rapides aux neutrons thermiques. La réaction de capture, de type (n, α), est donnée ci-après :10B + 1 n => 7Li + 4He + 2,6 MeV.

L'épaisseur déterminée par le nombre de spires et la largeur du recouvrement de chacune des spires sont des données ajustables. Les spires sont laches (non serrées).

Une poudre de brasure (typiquement à base de Ni pour améliorer ensuite la conductivité) avec son liant liquide (qui s'évapore facilement par tirage sous vide), peut être avantageusement badigeonnée sur la billette avant l'opération de recouvrement par tissage ou tressage.

La billette recouverte et éventuellement badigeonnée de brasure est introduite au fur et à mesure dans la gaine, pour que la couverture ainsi apposée ne se détende pas.

Un schéma de principe illustré en figure 2 met en évidence cet exemple de procédé de réalisation de l'enveloppe principale. Une gaine Ga est destinée à recevoir une billette de combustible nucléaire C_{Nu} sur laquelle sont enroulés des fils ou des fibres F_{SiC} de SiC, non représentées ont été enroulées au préalable en première épaisseur des fibres de quartz ou de SiO₂ , et ce après avoir été ancrées pour initier le début du tissage ou tressage.

Pour réaliser cette enveloppe principale avec les fibres F_{SiC}, la billette de combustible est mise en rotation et une tresseuse multicouche comportant un volant et des supports de bobines de tressage Bo_{FSiC} est également montée en rotation.

### Deuxième exemple de réalisation d'une aiguille selon l'invention :

La matrice de SiC sous forme de tissu est drapée le long de la billette à l'aide d'une bande pré-tissée et peu dense à base de fibres standards de SiC. Elle est ancrée pour l'opération de recouvrement en un point d'ancrage P_{A}. Les premières couches, au contact de la billette, sont avantageusement réalisées avec des bandes ou fibres pré-oxydées ou avec un tissage de fibres de quartz ou de silice SiO₂ ou de verre borosilicaté si l'on veut avoir une réserve de poison neutronique (déterminé par le bore dans le verre). Les premières couches au contact de la billette de métal pré-oxydée sont constituées de SiO₂.

L'épaisseur (nombre de couches ou de spires) et la largeur du recouvrement de chacune des spires sont des données ajustables. Les couches sont laches (non serrées).

On peut charger éventuellement l'espace inter-spire, par du Si pulvérulent ou de la mousse de SiC très poreuse, déversée en fonction et à la demande dans l'espace de fermeture de la bande en cours de recouvrement, lors de la rotation.

Une poudre de brasure (typiquement à base de Ni pour améliorer ensuite la conductivité) avec son liant liquide (qui s'évapore facilement par tirage sous vide) peut être avantageusement badigeonnée sur la billette avant l'opération de recouvrement par bandage.

La billette recouverte et éventuellement badigeonnée de brasure est introduite au fur et à mesure dans la gaine, pour que la couverture ainsi apposée ne se détende pas.

La figure 3 illustre le montage des bandes BF_{SiC} autour de la billette de combustible nucléaire C_{Nu} ainsi que les zones de chargement Zᵢₙₜₑᵣ de l'espace inter-spire par du Si ou de la mousse de Si par exemple et les zones de recouvrement inter-spire Z_{Re}, la flèche horizontale indiquant la direction d'introduction de la billette ainsi enroulée dans son enveloppe principale au sein de la gaine Go.

Quand l'opération de recouvrement est terminée, le système est ajusté à la bonne longueur (par simple coupe radiale) et éventuellement mis sous vide, pour évacuer le liant de la brasure tendre éventuellement apposée, avant la fermeture par soudage, la suite des opérations de fabrication de l'aiguille étant bien connue de l'homme de métier.

### Validations comportementales de l'aiguille de la présente invention en fonctionnement nominal à des températures stationnaires de 500°C

Dans cette gamme de température, le demandeur propose d'utiliser le SiC pour ses bonnes propriétés thermiques et physiques, pour son excellent comportement sous irradiation, notamment dans ces gammes de température, autour de 500°C, où le gonflement est typiquement de l'ordre de 0,5 à 1%, à dose intégrée donnée. Les interactions à l'état solide, entre le combustible métallique et le SiC (dès lors qu'ils sont en contact), ne sont pas nulles mais cinétiquement différée ou retardée par la présence de SiO₂ (quartz ou silice) sur le tissage, au contact de la couche de MO₂ formée par pré-traitement d'oxydation sur le combustible métallique.

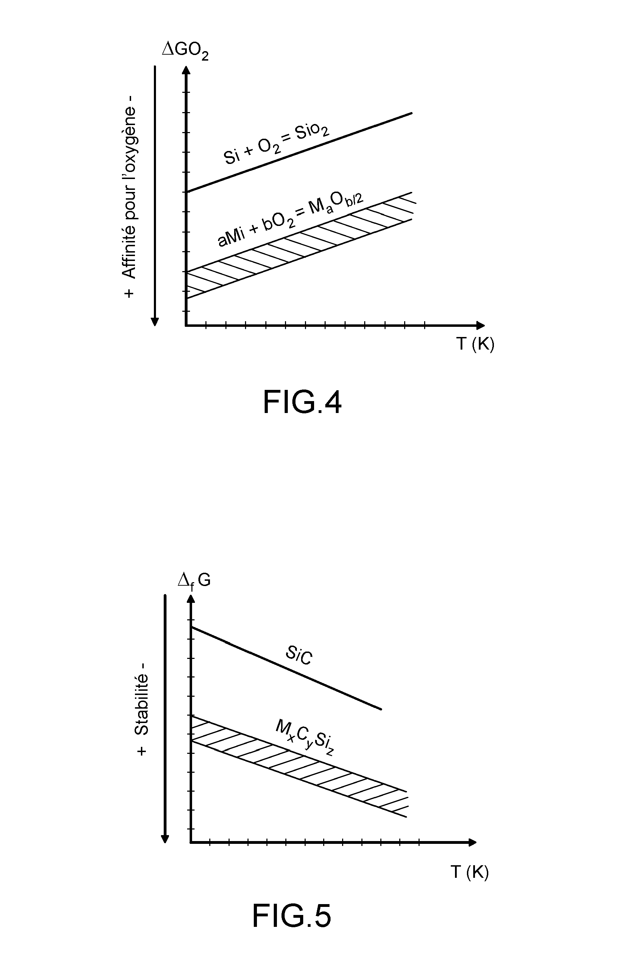

Thermodynamiquement, il est bien connu que l'affinité du silicium Si pour l'oxygène est inférieure à celle de l'U, ou du Zr. Ainsi, l'évolution chimique naturelle du système est-elle le déplacement de l'oxygène du quartz ou de la silice SiO₂ vers l'alliage d'actinide pour favoriser le maintien de son oxydation par le biais de la formation d'une couche indéterminée MᵤSiᵥO_{w} comme illustré en figure 4 montrant l'affinité de certain composés pour l'oxygène.

L'interaction entre la couverture tissée et l'alliage d'actinide peut ensuite former une couche d'interaction complexe MₓC_{y}Si_{z}, indéterminée a priori, mais dont la cinétique de croissance (diffusionnelle) est limitée par la température (typiquement quelques 10 à 100µm). Il est à noter qu'il n'y a pas d'interactions notables, à l'état solide, entre le SiC et les alliages inoxydables, en particulier les austénitiques de type 316L comme la gaine, jusqu'à une température de plus de 1200°C. Ces alliages peuvent d'ailleurs être chargés avec du SiC lors de leur élaboration pour les renforcer mécaniquement comme décrit dans l'article : Journal of Materials Science Letters 19 (2000), Vol. 7, pp 613-615 ; Materials Science and Engineering A 335 (2002), Vol. 1-2, pp 1-5.

Dans le fonctionnement, les propriétés mécaniques du tissage de SiC (d'abord lache à la mise en oeuvre), permettent, lors de la montée en température, de contenir la dilatation de l'alliage d'actinide (dont le coefficient de dilatation est typiquement trois fois plus important que celui du SiC), puis de contraindre le combustible métallique à se plastifier plutôt dans le sens longitudinal. Quand le jeu combustible-gaine est repris, ce SiC permet d'assurer une bonne évacuation des calories vers la gaine et le caloporteur, par conductivité (contact combustible-SiC tissé-gaine), avec, éventuellement et avantageusement, une brasure tendre de Ni, sans surcharger la gaine Fe-Cr ou Fe-Cr-Ni de contraintes (avec le dimensionnement qui convient).

Le caractère poreux de ce tissage de spires enroulées permet d'évacuer les gaz de fission vers le plenum.

Dans les conditions nominales donc, les interactions que l'on doit toujours attendre ou craindre en température entre un combustible nucléaire métallique sous flux et son gainage sont ici diminuées et réparties par principe tandis que par conception, l'eutectique combustible-gaine ne peut pas se former (pas de contact direct).

### Validations comportementales de l'aiguille de la présente invention en fonctionnement « incidentiel » à des températures supérieures à la température de fusion de l'alliage combustible métallique employé

A plus haute température, au dessus la température de fusion du combustible métallique UPuZr, à partir de 1000°C typiquement, c'est la grande réactivité et la faible résistance à la corrosion du SiC par les actinides fondus qui est intéressante. Contrairement à la plupart des autres utilisations, applications ou inventions utilisant le SiC, le demandeur propose d'employer le SiC en tant que matériau de faible inertie chimique, utilisé comme consommable, pour réagir avec l'alliage d'actinides fondus, et donner naissance à des carbures et siliciures réfractaires et moins denses que l'alliage métallique UPuZr qui leur a donné naissance.

Le SiC ne peut pas thermodynamiquement et cinétiquement résister à la corrosion des alliages d'actinides fondus, et en particulier d'un alliage tel que l'UPuZr, car les éléments Pu, U et Zr ont une très forte affinité pour le carbone, pour former de nombreux carbures thermodynamiquement plus stables que le SiC, et pour le Si, pour former de nombreux siliciures, et des carbosiliciures mixtes MₓC_{y}Si_{z}, la figure 5 illustre à ce titre le diagramme de stabilité relative de carbures, siliciures ou carbosiliciures, montrant l'enthalpie libre de formation Δ_{f}G (u.a.) pour M = U, Pu, Zr.

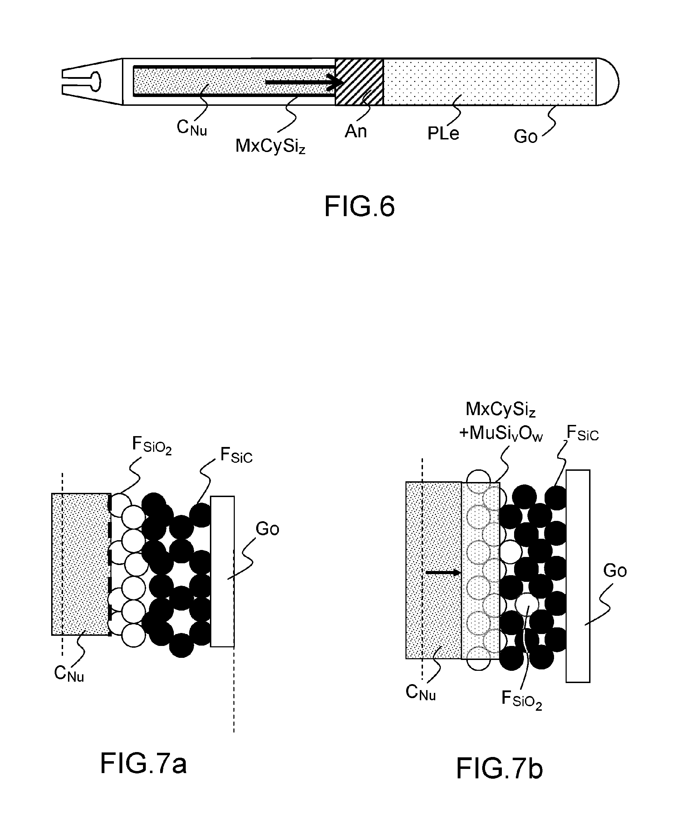

Il s'en suit ainsi la formation de ces carbosiliciures mixtes MₓC_{y}Si_{z}, illustrés sur la figure 6, ces carbosiliciures mixtes constituants une paroi entre la gaine et le combustible nucléaire non fondu. Ces composés réfractaires moins denses diminuent la réactivité neutronique locale car ils sont moins denses, et donc voient leur température décroître (contre réaction neutronique), car chauffant moins.

D'un simple point de vue thermodynamique, il est possible de comprendre sur les bases de la physico-chimie des interfaces état fondu/SiC [Survey on wetting of SiC by molten metals, G.W. Liu, M.L. Muolo, F. Valenza, A. Passerone, Ceramics International 36, 4 (May 2010) 1177-1188 ; Acta metall, mater. Vol. 43, No. 3, pp. 907-912, 1995] ainsi qu'à la lecture des binaires U-Si [Journal of Nuclear Materials 389 (2009) 101-107], U-C [Journal of Nuclear Materials 288 (2001) 100-129], Pu-Si [Journal of Nuclear Materials, Volume 15, Issue 1, 1965, Pages 23-32], Pu-C [Computer Coupling of Phase Diagrams and Thermochemistry 32 (2008) 371-377], que l'activité thermodynamique en carbone ou silicium dans le Pu ou l'U fondu augmente très rapidement, et que la précipitation des solides MSiₓ (U₃Si₂, à 1000°C typiquemement), MCₓ voire MCₓSi_{y} s'impose thermodynamiquement. relatifs aux composés binaires : Fe-Si, U-Si, Pu-SI, Pu-C, U-C, Zr-Si.

Aussi, le métal liquide va-t-il former rapidement une couche d'interaction très complexe MSiₓC_{y} faites de nombreux carbures et siliciures de ces différents éléments, couche d'interaction que l'on sait plutôt réfractaire (les points de fusion des composés sont pour la plupart compris entre 1000 et 1600°C typiquement comme les siliciures de plutonium [Suppl. to IEEE Transactions on Aerospace, June 1965, Plutonium Compounds for Space Power Applications] et conductrice efficace de la chaleur, comme la plupart des carbures et siliciures comme décrit notamment dans l'article : Journal of Nuclear Materials, Volume 168, Issues 1-2, October-November 1989, Pages 137-143*). Suppl. to* IEEE Transactions on Aerospace, June 1965, Plutonium Compounds for Space Power Applications*.*

Les composés MSiₓC_{y} formés sont moins denses que le métal combustible (entre 4,9 g.cm⁻³ pour le ZrSi₂, entre 7-8 et 10 g.cm⁻³ pour les siliciures d'U et de Pu), et, en moyenne, moins denses que la moyenne des masses volumiques des volumes de SiC (avantageusement chargé en Si) et d'actinide fondu ayant donné naissance à ces composés.

Du fait de la dédensification, le métal fondu, assimilé à un tube liquide n'ayant pas encore réagi est mécaniquement évacué vers le haut comme indiqué par la flèche en figure 6, charriant d'éventuels produits MSiₓC_{y} moins denses ou flottant en diminuant de facto la densité en atomes fissiles localement au niveau de la colonne fissile (création in-situ d'un combustible nucléaire composite dont la densité en atomes lourds est moins importante), par effet de compression radiale et de fermeture dudit tube liquide, lors de la progression de l'interaction.

Le vase d'expansion de l'alliage d'actinide fondu (dans le plenum) est protégé du caractère corrosif du combustible fondu, et notamment du plutonium, par le revêtement de tantale Ta, des matériaux classiquement utilisé pour ce type de problème (voir par exemple le brevet FR 2752234 de 1998 décrivant une nacelle composite Inox/Ta/Inox développée par le CEA/DAM pour contenir les alliages liquides de Pu-Ga).

Dans le principe, toute réaction chimique produisant des composés solides et moins denses à la température considérée, peut permettre un fonctionnement comme celui décrit.

Les figures 7a et 7b schématisent ainsi avec des coupes transversales, l'évolution des interfaces combustible nucléaire métallique C_{Nu} / enveloppe primaire constituées de fibres F_{SiO2} de silice / enveloppe principale constituée de fibres F_{siC} de SiC / gaine Go, au cours de la réaction de fusion de combustible nucléaire avec l'apparition d'une interface supplémentaire de combustible nucléaire métallique fondu ayant réagi avec le SiC pour donner naissance à des composés MₓC_{y}S_{iz} et des oxydes MᵤSiᵥO_{w}. Le combustible nucléaire C_{Nu} est dilaté et gonflé, les spires constitutives de l'enveloppe principale en F_{SiC} étant comprimées contre la gaine Go.

## Revendications

1. Aiguille de combustible nucléaire comprenant un élément linéaire de matériau combustible nucléaire métallique (C_{Nu}) à base de l'uranium et/ou du plutonium et une gaine (Go) comprenant du Fe et du Cr ou un alliage comprenant au moins ces deux éléments **caractérisée en ce qu'**elle comporte en outre une enveloppe principale disposée autour de l'élément linéaire de combustible nucléaire, ladite enveloppe comprenant des fils ou fibres (F_{SiC}), en SiC.

2. Aiguille de combustible nucléaire selon la revendication 1, **caractérisée en ce que** la gaine comprend en outre une partie creuse d'évacuation des produits d'échauffement et un réservoir séparant ladite partie creuse dudit élément linéaire de combustible nucléaire métallique.

3. Aiguille de combustible nucléaire selon la revendication 2, **caractérisé en ce que** ledit réservoir comprend un anneau (An) en matériau résistant à la corrosion des actinides fondus.

4. Aiguille de combustible nucléaire selon la revendication 3, **caractérisé en ce que** ledit anneau est en Tantale (Ta).

5. Aiguille de combustible nucléaire selon l'une des revendications 1 à 4, **caractérisée en ce que** le SiC constitutif des fibres est de variété allotropique cubique β.

6. Aiguille de combustible nucléaire selon l'une des revendications 1 à 5, **caractérisée en ce que** l'enveloppe comprend en outre des charges de Si libre.

7. Aiguille de combustible nucléaire selon l'une des revendications 1 à 6, **caractérisée en ce que** ladite enveloppe principale comporte des bandes comprenant des fils ou des fibres de SiC.

8. Aiguille de combustible nucléaire selon l'une des revendications 1 à 7, **caractérisée en ce que** l'enveloppe principale comprend une succession d'épaisseurs de fibres de SiC enroulées autour de l'élément linéaire de matériau combustible métallique.

9. Aiguille de combustible nucléaire selon l'une des revendications 1 à 7, **caractérisée en ce qu'**il comprend en outre une enveloppe primaire de fibres de silice ou de quartz insérée entre l'élément linéaire de combustible nucléaire et l'enveloppe principale.

10. Aiguille de combustible nucléaire selon les revendications 8 et 9, **caractérisée en ce que** l'enveloppe primaire comporte une succession d'épaisseurs de fibres de silice ou de quartz enroulées autour de l'élément linéaire de matériau combustible métallique.

11. Procédé de fabrication d'une aiguille de combustible nucléaire métallique selon l'une des revendications 1 à 10, **caractérisée en ce qu'**il comprend la réalisation d'une enveloppe principale autour de l'élément linéaire de combustible nucléaire métallique par tissage ou tressage de fibres de SiC.

12. Procédé de fabrication d'une aiguille de combustible nucléaire métallique selon la revendication 7, **caractérisé en ce qu'**il comprend la réalisation d'une enveloppe principale avec des bandes de fibres de SiC enroulées autour de l'élément linéaire de combustible nucléaire métallique.

13. Procédé de fabrication d'une aiguille de combustible nucléaire selon l'une des revendications 11 ou 12, **caractérisé en ce qu'**il comprend en outre une étape préalable d'oxydation de surface de l'élément linéaire de combustible nucléaire métallique.

14. Procédé de fabrication d'une aiguille de combustible nucléaire selon l'une des revendications 11 à 13, **caractérisé en ce qu'**il comprend en outre une étape préalable d'enduction de l'élément linéaire par un liant comportant une poudre de brasure tendre à base de matériau conducteur.

15. Procédé de fabrication d'une aiguille de combustible nucléaire selon l'une des revendications 11 à 14, **caractérisé en ce qu'**il comprend en outre la réalisation d'une enveloppe primaire entre l'élément linéaire combustible nucléaire métallique et l'enveloppe principale, ladite enveloppe primaire comportant des fibres de silice ou de quartz.

## Patentansprüche

1. Kernbrennstab, der ein lineares Element eines brennbaren nuklearen metallischen Materials (C_{Nu}) auf der Basis von Uran und/oder Plutonium sowie einen Mantel (Go) umfasst, der Fe und Cr oder eine wenigstens diese beiden Elemente enthaltende Legierung enthält, **dadurch gekennzeichnet, dass** er ferner eine Hauptumhüllung umfasst, die um das lineare Kernbrennstoffelement herum angeordnet ist, wobei die Umhüllung Fäden oder Fasern (F_{SIC}) aus SiC umfasst.

2. Kernbrennstab nach Anspruch 1, **dadurch gekennzeichnet, dass** der Mantel ferner einen hohlen Teil zum Abführen von Erhitzungsprodukten und ein Reservoir umfasst, das den hohlen Teil von dem linearen metallischen Kernbrennstoffelement trennt.

3. Kernbrennstab nach Anspruch 2, **dadurch gekennzeichnet, dass** das Reservoir einen Ring (An) aus einem Material umfasst, das korrosionsbeständig gegenüber geschmolzenen Aktiniden ist.

4. Kernbrennstab nach Anspruch 3, **dadurch gekennzeichnet, dass** der Ring aus Tantal (Ta) besteht.

5. Kernbrennstab nach einem der Ansprüche 1 bis 4, **dadurch gekennzeichnet, dass** das die Fasern bildende SiC von einer kubischen allotropen Sorte β ist.

6. Kernbrennstab nach einem der Ansprüche 1 bis 5, **dadurch gekennzeichnet, dass** die Umhüllung ferner freie Si-Ladungen beinhaltet.

7. Kernbrennstab nach einem der Ansprüche 1 bis 6, **dadurch gekennzeichnet, dass** die Hauptumhüllung SiC-Fäden oder -Fasern umfassende Bänder umfasst.

8. Kernbrennstab nach einem der Ansprüche 1 bis 7, **dadurch gekennzeichnet, dass** die Hauptumhüllung eine Folge von Dicken von SiC-Fasern umfasst, die um das lineare metallische Brennmaterialelement herum gewickelt sind.

9. Kernbrennstab nach einem der Ansprüche 1 bis 7, **dadurch gekennzeichnet, dass** er ferner eine primäre Umhüllung aus Silicium- oder Quarzfasern umfasst, die zwischen das lineare Kernbrennstabelement und die Hauptumhüllung eingefügt ist.

10. Kernbrennstab nach den Ansprüchen 8 und 9, **dadurch gekennzeichnet, dass** die primäre Umhüllung eine Folge von Dicken von Silicium- oder Quarzfasern umfasst, die um das lineare metallische Brennstoffelement herum gewickelt sind.

11. Verfahren zur Herstellung eines metallischen Kernbrennstabs nach einem der Ansprüche 1 bis 10, **dadurch gekennzeichnet, dass** es die Herstellung einer Hauptumhüllung um das lineare metallische Kernbrennstoffelement durch Weben oder Flechten von SiC-Fasern beinhaltet.

12. Verfahren zur Herstellung eines metallischen Kernbrennstabs nach Anspruch 7, **dadurch gekennzeichnet, dass** es die Herstellung einer Hauptumhüllung mit Bändern aus SiC-Fasern beinhaltet, die um das lineare metallische Kernbrennstoffelement herum gewickelt sind.

13. Verfahren zur Herstellung eines Kernbrennstabs nach Anspruch 11 oder 12, **dadurch gekennzeichnet, dass** es einen Vorabschritt der Oberflächenoxidation des linearen metallischen Kernbrennstoffelements beinhaltet.

14. Verfahren zur Herstellung eines Kernbrennstabs nach einem der Ansprüche 11 bis 13, **dadurch gekennzeichnet, dass** es ferner einen Vorabschritt des Beschichtens des linearen Elements mit einem Bindemittel beinhaltet, das ein Weichlötpulver auf der Basis eines leitenden Materials beinhaltet.

15. Verfahren zur Herstellung eines Kernbrennstabs nach einem der Ansprüche 11 bis 14, **dadurch gekennzeichnet, dass** es ferner die Herstellung einer primären Umhüllung zwischen dem linearen metallischen Kernbrennstoffelement und der Hauptumhüllung beinhaltet, wobei die primäre Umhüllung Silicium- oder Quarzfasern beinhaltet.

## Claims

1. A nuclear fuel rod comprising a linear element of an uranium-based and/or a plutonium-based metal nuclear fuel material (C_{Nu}) and a sheath (Go) comprising Fe and Cr or an alloy comprising at least these two elements, **characterised in that** it further comprises a main cladding disposed around said linear nuclear fuel element, said cladding comprising yarns or fibres (F_{SIC}) made of SiC.

2. The nuclear fuel rod according to claim 1, **characterised in that** said sheath further comprises a hollow part for discharging heating products and a tank separating said hollow part from said linear metallic nuclear fuel element.

3. The nuclear fuel rod according to claim 2, **characterised in that** said tank comprises a ring (An) made of a material that is resistant to corrosion from melted actinides.

4. The nuclear fuel rod according to claim 3, **characterised in that** said ring is made of tantalum (Ta).

5. The nuclear fuel rod according to any one of claims 1 to 4, **characterised in that** the Sic forming the fibres is of the cubic allotropic variety β.

6. The nuclear fuel rod according to any one of claims 1 to 5, **characterised in that** said cladding further comprises free Si charges.

7. The nuclear fuel rod according to any one of claims 1 to 6, **characterised in that** said main cladding comprises strips comprising SiC yarns or fibres.

8. The nuclear fuel rod according to any one of claims 1 to 7, **characterised in that** said main cladding comprises a succession of thicknesses of SiC fibres wound around said linear metallic fuel material element.

9. The nuclear fuel rod according to any one of claims 1 to 7, **characterised in that** it further comprises a primary cladding of silicon or quartz fibres inserted between said linear nuclear fuel element and said main cladding.

10. The nuclear fuel rod according to claims 8 and 9, **characterised in that** said primary cladding comprises a succession of thicknesses of silicon or quartz fibres wound around said linear metallic fuel material element.

11. A method for manufacturing a metal nuclear fuel rod according to any one of claims 1 to 10, **characterised in that** it comprises the production of a main cladding around said linear metallic nuclear fuel element by weaving or braiding SiC fibres.

12. The method for manufacturing a metal nuclear fuel rod according to claim 7, **characterised in that** it comprises the production of a main cladding with strips of SiC fibres wound around said linear metallic nuclear fuel element.

13. The method for manufacturing a nuclear fuel rod according to claim 11 or 12, **characterised in that** it further comprises a prior step of surface oxidisation of said linear metallic nuclear fuel element.

14. The method for manufacturing a nuclear fuel rod according to any one of claims 11 to 13, **characterised in that** it further comprises a prior step of coating said linear element with a binder comprising a soft brazing powder based on a conducting material.

15. The method for manufacturing a nuclear fuel rod according to any one of claims 11 to 14, **characterised in that** it further comprises the production of a primary cladding between said linear metallic nuclear fuel element and said main cladding, said primary cladding comprising silicon or quartz fibres.
